# EUROPÄISCHE PATENTSCHRIFT

(11) **EP 3 644 144 B1**
(45) Veröffentlichungstag und Bekanntmachung des Hinweises auf die Patenterteilung: **31.03.2021**
(21) Anmeldenummer: 19152291.1
(22) Anmeldetag: 17.01.2019
(51) Int. Cl.: G05B 19/042, B60T 17/18

(54) **VERFAHREN ZUR BEREITSTELLUNG VON STEUERUNGSINFORMATIONEN FÜR EINE FAHRASSISTENZFUNKTION**
METHOD FOR PROVIDING CONTROL INFORMATION FOR A DRIVER ASSISTANCE FUNCTION
PROCÉDÉ DE FOURNITURE DES INFORMATIONS DE COMMANDE POUR UNE FONCTION D'AIDE À LA CONDUITE

(30) Priorität: 23.10.2018 EP 18465610
(43) Veröffentlichungstag der Anmeldung: 29.04.2020
(73) Patentinhaber: Continental Teves AG & Co. OHG, 60488 Frankfurt am Main (DE)
(72) Erfinder: Bosancu, Ilie, 550151 Sibiu (RO)
(74) Vertreter: Continental Corporation

(56) Entgegenhaltungen:
- DE-A1-102014 223 002
- DE-A1-102015 212 944
- US-A1- 2017 341 636

## Beschreibung

Die vorliegende Anmeldung betrifft ein Verfahren zur Bereitstellung von Steuerungsinformationen für eine Fahrassistenzfunktion eines Fahrzeugs durch eine Steuervorrichtung, sowie ein entsprechendes Computerprogrammprodukt.

Derartige Verfahren zur Umsetzung von den Fahrzustand eines Fahrzeugs beschreibenden Eingangssignalen in Steuerungssignale sind aus dem Stand der Technik in vielfältigen Variationen bekannt.

Beispielsweise beschreibt die DE 10 2014 223 002 A1 ein Verfahren zum sicheren Betreiben eines Kraftfahrzeugs, bei dem Eingangssignal, welches den Zustand des Kraftfahrzeugs, eines Umfelds des Kraftfahrzeugs und eines Fahrerwunsches charakterisieren einem Überwachungsblock zugeführt wird. Dabei ist vorgesehen, dass der Überwachungsblock einen Eingangssignalüberwachungsblock und einen Funktionsüberwachungsblock umfasst, wobei das Eingangssignal zunächst dem Eingangssignalüberwachungsblock zugeführt wird, der das Eingangssignal auf Plausibilität überprüft, und abhängig vom Ergebnis dieser Überprüfung ein abgesichertes Eingangssignal an den Funktionsüberwachungsblock übermittelt, wobei der Funktionsüberwachungsblock das Eingangssignal daraufhin überprüft, ob im Kraftfahrzeug ein Fehlerzustand vorliegt, oder nicht.

Ferner beschreibt die DE 10 2015 212 944 A1 ein Verfahren und eine Vorrichtung zum Ermitteln von Drehwinkelgeschwindigkeiten und/oder Drehwinkelpositionen von Fahrzeugrädern eines Kraftfahrzeuges.

Die US 2017/0341636 A1 beschreibt ferner ein Verfahren zur Validierung eines Bremsmomentsignals durch Rationalisierung eines Bremspedalpositionssignals und eines Drucksignals des Hauptzylinders und durch Rationalisierung des Bremspedalpositionssignals und des Bremsmomentsignals und zur Freigabe oder Blockierung einer Nutzung des Bremsmomentsignals als ein Eingabesignal eines Bremsvorgangs in Abhängigkeit von dem Ergebnis der Validierung.

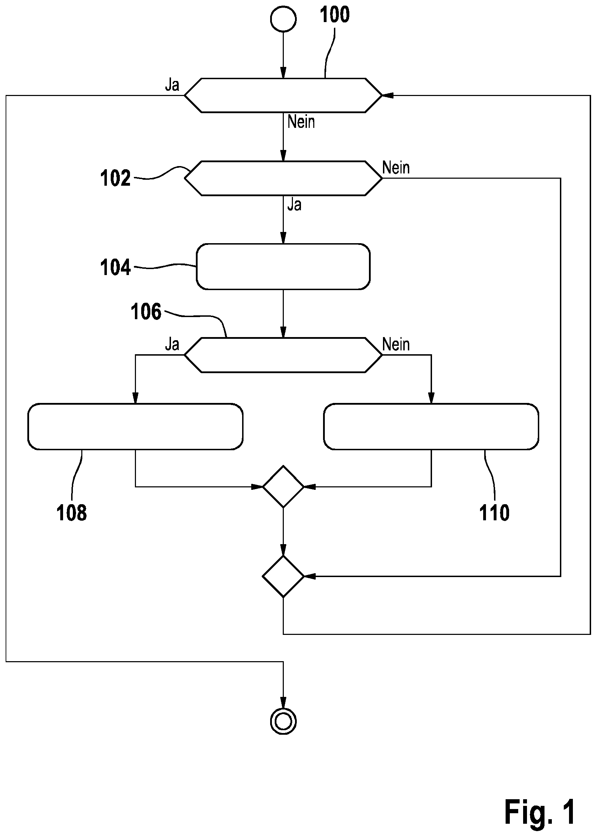

Hierzu ist exemplarisch in der Figur 1 ein entsprechender Verfahrensablauf dargestellt, wie er gemäß dem Stand der Technik beispielsweise in einer entsprechenden Steuervorrichtung umgesetzt wird. Dabei wird in einem ersten Verfahrensschritt 100 zunächst geprüft, ob alle vorhandenen Signale bereits verarbeitet wurden. Ist dies der Fall, ist das Verfahren an dieser Stelle abgeschlossen. Wird hierbei jedoch festgestellt, dass nicht alle Signale verarbeitet wurden, wird anschließend in Schritt 102 geprüft, ob neue Eingangssignale empfangen wurden. Ist dies nicht der Fall, springt das Verfahren wieder zurück auf den Schritt 100. Wird hingegen festgestellt, dass ein neues Eingangssignal empfangen wurde, wird in Schritt 104 das empfangene Eingangssignal dekodiert und in Schritt 106 geprüft, ob das Eingangssignal gültig ist. Ist dies der Fall, wird in Schritt 108 ein entsprechendes Ausgangsdatenelement erzeugt und das Verfahren springt zurück auf den Verfahrensschritt 100. Wird in Schritt 106 hingegen festgestellt, dass das Eingangssignal nicht gültig ist, wird in Schritt 110 eine entsprechende Fehlermeldung generiert. Auch in diesem Fall springt das Verfahren anschließend wieder zurück zu Schritt 100, sodass das Verfahren erst endet, wenn alle vorhandenen Signale verarbeitet wurden.

Demzufolge wird jedes Eingangssignal in Schritt 102 sofort verarbeitet, wenn es in einer entsprechenden Steuerungsvorrichtung empfangen wurde. Dieser Ansatz ist insofern nachteilig, dass die Ausgangsdatenelemente nicht synchron bestimmt werden, sondern sukzessive, in Abhängigkeit des Eintreffens neuer Eingangssignale. Daher kann im Zuge dieses Verfahrens ein Satz von Ausgangsdatenelementen erzeugt werden, welcher per se ungültig ist, da er aus einem unvollständigen Satz an Eingangssignalen bestimmt wurde. Dies kann im schlimmsten Fall zu einem Ausfall des Steuerungssystems führen, wenn der so entstandene Satz von Ausgangsdatenelementen beispielsweise zur Steuerung einer Fahrzeugfunktion verwendet wird.

Dabei ist üblicherweise die Zuordnung zwischen Eingangssignalen und Ausgangsdatenelementen in einer Tabelle hinterlegt, in der die Zuordnung lediglich über die entsprechenden Zeilen der Tabelle erfolgt. Diese Art der Zuordnung von Eingangssignalen zu Ausgangsdatenelementen ist jedoch nachteilig, wenn aus der Tabelle einzelne Eingangssignale gelöscht werden. In diesem Fall muss die gesamte Tabelle neu zugeordnet werden, da andernfalls die zeilenweise Zuordnung fehlerhaft wird.

Schließlich wird gemäß dem Stand der Technik bei einem Fehler bzw. einem fehlerhaften Eingangssignal lediglich eine Information erzeugt, dass das Eingangssignal fehlerhaft ist. Es fehlt jedoch an einer Möglichkeit, zu definieren, inwiefern das Eingangssignal fehlerhaft war, bzw. aus welchem Grund eine Fehlermeldung ausgegeben wurde.

Der Erfindung liegt demgegenüber die Aufgabe zugrunde, ein verbessertes Verfahren zur Bereitstellung von Steuerungsinformation zu schaffen, dass die zuvor beschriebenen Nachteile des Standes der Technik überwindet.

Diese Aufgabe wird mit dem computer-implementierten Verfahren gemäß Anspruch 1 sowie durch das Computerprogramm Produkt nach Anspruch 8 gelöst. Vorteilhafte Ausgestaltungen des Verfahrens sind Gegenstand der Ansprüche 2 bis 7.

In einem ersten Aspekt betrifft die Erfindung ein Verfahren zur Bereitstellung von Steuerungsinformationen für eine Fahrassistenzfunktion eines Fahrzeugs durch eine Steuervorrichtung. Dabei ist ein Signaleingang der Steuervorrichtung mit einer Signalquelle und ein Signalausgang der Steuervorrichtung mit einer die Fahrassistenzfunktion umsetzenden Vorrichtung verbunden. Die Steuervorrichtung weist einen Datenspeicher auf, in dem eine Zuordnung hinterlegt ist, die von der Signalquelle empfangenen Eingangssignalarten jeweils Ausgangsdatenelemente zuordnet. Das Verfahren weist dabei das Empfangen von Eingangssignalen von der Signalquelle über den Signaleingang der Steuervorrichtung, das Validieren der empfangenen Eingangssignale, das Bestimmen von temporären Werten für die Ausgangsdatenelemente aus den entsprechend der Zuordnung den Ausgangsdatenelementen zugeordneten Eingangssignalen, das Setzen der jeweiligen temporären Werte als Werte der entsprechenden Ausgangsdatenelemente, wenn für jede Eingangssignalart jeweils wenigstens ein Eingangssignal empfangen und alle Eingangssignale validiert wurden, und das Bereitstellen der Ausgangsdatenelemente als Steuerungsinformationen für die die Fahrassistenzfunktion umsetzende Vorrichtung auf.

Unter einer "Fahrassistenzfunktion" ist dabei jedwede Funktion eines Fahrzeugs zu verstehen, welche das Fahrverhalten des Fahrzeugs beeinflusst.
Beispielsweise kann es sich bei einer Fahrassistenzfunktion um eine Antischlupfregelung, ein Antiblockiersystem, eine fahrdynamische Stabilitätsregelung oder eine Steuerung für (teil)autonomes Fahren handeln. Dabei kann eine Steuerungsinformation für eine solche Fahrassistenzfunktion beispielsweise eine Information darüber sein, wie stark eine Antischlupfregelung in das Fahrverhalten des Fahrzeugs eingreifen soll, bzw. wie viel Schlupf zugelassen werden soll. Ferner kann eine Steuerungsinformation auch einen Parameter beinhalten, der den Fahrzustand beschreibt, wie beispielsweise eine Raddrehzahl, ein Bremsdruck eine Reifentemperatur oder ähnliches.

Eine "Eingangssignalart" beschreibt dabei einen bestimmten Typ von Eingangssignal, der beispielsweise durch eine Kopfzeile in einem empfangenen Informationsblock bzw. Datenstrom identifiziert werden kann. Unter dem "Eingangssignal" an sich wird hingegen der Inhalt des empfangenen Informationsblocks verstanden, während der Wert des Eingangssignals der für ein zugeordnetes Ausgangsdatenelement relevante Eintrag des Informationsblocks ist. Durch die Vielzahl von Werten der Eingangssignale unterschiedlicher Signalarten wird dabei eine Systemkonfiguration des Fahrzeugs kodiert.

Das erfindungsgemäße Verfahren hat dabei den Vorteil, dass zunächst bei einem Empfangen von Eingangssignalen nur temporäre Ausgangsdatenelemente bestimmt werden, die jedoch noch nicht als tatsächliche Ausgangsdatenelemente von der Steuerungsvorrichtung ausgegeben werden. Vielmehr werden die temporären Ausgangsdatenelemente so lange zurückgehalten, bis ein vollständiger Satz von Eingangssignalen für alle relevanten Eingangssignalarten empfangen wurde. So wird vermieden, dass ein unvollständiger Satz von Ausgangsdatenelementen bereitgestellt wird, der zu einer fehlerhaften Steuerung der Fahrassistenzfunktion führen könnte.

Dabei ist ferner vorgesehen, dass die empfangenen Eingangssignale validiert werden, bevor sie zur Bestimmung der Ausgangsdatenelemente herangezogen werden. Unter einer Validierung ist dabei allgemein eine Prüfung der Eingangssignale auf deren Sinnhaftigkeit bzw. Belastbarkeit zu verstehen. Folglich wird an dieser Stelle auch vermieden, dass fehlerhafte Eingangssignale in die Steuerung der Fahrassistenzfunktion einfließen.

Neben einem direkten Übermitteln der Ausgangsdatenelemente an eine die Fahrassistenzfunktion umsetzende Vorrichtung kann dabei auch vorgesehen sein, dass die Ausgangsdatenelemente zunächst in weiteren Datenverarbeitungsschritten in derselben Steuervorrichtung, oder einer anderen Datenverarbeitungseinheit weiterverarbeitet werden, bevor sie an die Vorrichtung der Fahrassistenzfunktion weitergegeben werden.

Die einzelnen Verfahrensschritte des beschriebenen Verfahrens müssen dabei nicht zwingend in der beschriebenen Reihenfolge ausgeführt werden. Vielmehr kann die Reihenfolge der Verfahrensschritte beliebig vertauscht werden, sofern dies logisch sinnvoll ist. Beispielsweise können die Schritte des Bestimmens von temporären Werten für die Ausgangsdatenelemente und das Validieren der empfangenen Eingangssignale parallel, oder in umgekehrter Reihenfolge ablaufen.

Vorzugsweise wird dabei das beschriebene Verfahren als computerimplementiertes Verfahren auf einer entsprechend angepassten Datenverarbeitungsvorrichtung durchgeführt.

Die eingangs beschriebene Problematik, die sich aus einer tabellarischen Zuordnung von Eingangssignalen zu Ausgangsdatenelementen ergibt, wird dabei nach einer Ausführungsform dadurch vermieden, dass in der Zuordnung jeder Eingangssignalart und jedem Ausgangsdatenelement jeweils ein eindeutiger Identifikator zugeordnet ist, wobei die Zuordnung von Eingangssignalarten zu Ausgangsdatenelementen durch eine Verknüpfung der Identifikatoren erfolgt. Die Verknüpfung der Identifikatoren kann dabei beispielsweise in einer separaten Tabelle abgelegt sein, die von der Steuervorrichtung bei Durchführung des erfindungsgemäßen Verfahrens abgefragt wird.

Nach einer weiteren Ausführungsform handelt es sich bei der Signalquelle um einen Feldbus des Fahrzeugs, wobei über den Feldbus übermittelte Eingangssignale Fahrzustandsgrößen des Fahrzeugs beschreiben. Bei dem Feldbus kann es sich beispielsweise um einen CAN-Bus oder Flexray handeln.

Unter einer "Fahrzustandsgröße" sind dabei jedwede Informationen zu verstehen, die den gegenwärtigen Zustand des Fahrzeugs beschreiben. Beispielsweise kann eine Raddrehzahl oder ein Bremsdruck als Fahrzustandsgröße im Sinne der Erfindung verstanden werden. Allerdings können auch Informationen, wie beispielsweise die aktuelle Einstellung eines Fahrassistenzprogramms als Fahrzustandsgröße verstanden werden, welche in diesem Fall beispielsweise ausgehend von der Einstellung eines entsprechenden Reglers angibt, wie viel Schlupf eine Antischlupfregelung zulassen soll. Auch kann eine Fahrzustandsgröße eine komplexe Größe, wie beispielsweise ein gewähltes Fahrprogramm sein, dass eine Vielzahl von individuellen Einstellungen und Informationen umfasst. Aus einer solchen komplexen Größe werden dann im Zuge des Verfahrens die entsprechenden Steuerungsinformationen abgeleitet, die dann durch die Fahrassistenzfunktion verwendet werden können.

Die Zuordnung weist dabei nach einer weiteren Ausführungsform Berechnungsvorschriften zur Bestimmung des Wertes eines bestimmten Ausgangsdatenelements aus wenigstens einem zugeordneten Eingangssignal auf.

Eine Berechnungsvorschrift kann dabei sowohl eine direkte Bestimmung von Zahlenwerten beschreiben, als auch eine logische Zuordnung von Informationen. Beispielsweise kann die Berechnungsvorschrift angeben, dass bei einem bestimmten Eingangssignal ein fest vorgegebenes Ausgangsdatenelement zu erzeugen ist. Dabei ist es auch möglich, dass unterschiedliche Eingangssignale zu identischen Ausgangsdatenelementen führen, die Zuordnung also nicht injektiv ist.

Zur Validierung der Eingangssignale ist nach einer Ausführungsform vorgesehen, dass bei dem Validieren eines Eingangssignals das Eingangssignal als validiert gilt, wenn das Eingangssignal mehrfach, mit einer vorgegebenen Anzahl an Wiederholungen, mit identischem Informationsgehalt empfangen wurde. Dabei muss nicht zwingend das vollständige Eingangssignal immer wieder identisch empfangen werden. Relevant ist hier lediglich, dass die aus dem Eingangssignal abgeleitete Information, welche in die Bestimmung des zugeordneten Ausgangsdatenelements einfließt, mehrfach identisch empfangen wurde. Dabei kann die erforderliche Anzahl von identischen Wiederholungen an spezifische Erfordernisse angepasst werden, ist also nicht absolut festgelegt.

Nach einer weiteren Ausführungsform ist vorgesehen, dass das Verfahren abgebrochen und eine Fehlermeldung ausgegeben wird, wenn innerhalb einer vordefinierten Zeitspanne wenigstens ein Eingangssignal nicht validiert wurde. Beispielsweise kann vorgesehen sein, dass ab dem ersten Empfangen eines neuen Eingangssignals nur eine bestimmte Zeitspanne zulässig ist, innerhalb derer ein vollständiger Satz von validierten Eingangssignalen empfangen werden muss. Andernfalls wird davon ausgegangen, dass die empfangenen Eingangssignale fehlerhaft sind.

Um im Falle eines Abbruchs des Verfahrens eine Nachvollziehbarkeit des Verfahrensablaufs bzw. dessen Abbruchs zu gewährleisten, ist nach einer weiteren Ausführungsform vorgesehen, dass bei Feststellung einer Invalidität eines Eingangssignals das Eingangssignal als ungültig gekennzeichnet wird, wobei das Kennzeichen einen Grund für die Invalidität identifiziert. Beispielsweise kann das Kennzeichen, im Folgenden auch als "Fehlerkennzeichen" bezeichnet, angeben, dass nacheinander empfangene Eingangssignale derselben Eingangssignalart einen unterschiedlichen Informationsgehalt aufgewiesen haben und folglich als ungültig erkannt wurden.

Ferner kann, anknüpfend an die zuvor beschriebene Ausführungsform, bei Ablauf der vordefinierten Zeitspanne und dem entsprechenden Abbruch des Verfahrens auch vorgesehen sein, dass das Fehlerkennzeichen die Information enthält, dass die vordefinierte Zeitspanne abgelaufen ist, bevor ein vollständiger Satz von validierten Eingangssignalen empfangen wurde.

In einem weiteren Aspekt betrifft die Erfindung ein Computerprogrammprodukt mit durch eine Datenverarbeitungsvorrichtung interpretierbaren Instruktionen, das, auf der Datenverarbeitungsvorrichtung ausgeführt, die Datenverarbeitungsvorrichtung dazu veranlasst, das Verfahren nach einem der vorherigen Ansprüche auszuführen.

Im Folgenden werden bevorzugte Ausführungsformen der Erfindung anhand der Figuren näher erläutert. Dabei zeigen:
- Fig. 1: ein Flussdiagramm eines Verfahrensablaufs nach dem Stand der Technik,
- Fig. 2: ein Flussdiagramm eines allgemeinen Verfahrensablaufs nach einem Ausführungsbeispiel der Erfindung,
- Fig. 3: ein Flussdiagramm zur initialen Verarbeitung von Eingangssignalen,
- Fig. 4: ein Flussdiagramm zur Bestimmung der Ausgangsdatenelemente und
- Fig. 5: ein Flussdiagramm zur Fehlerbehandlung.

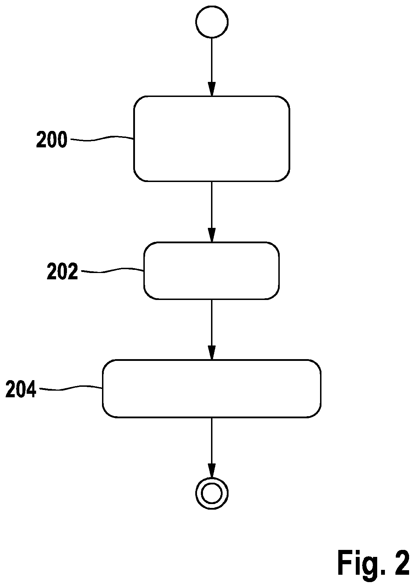

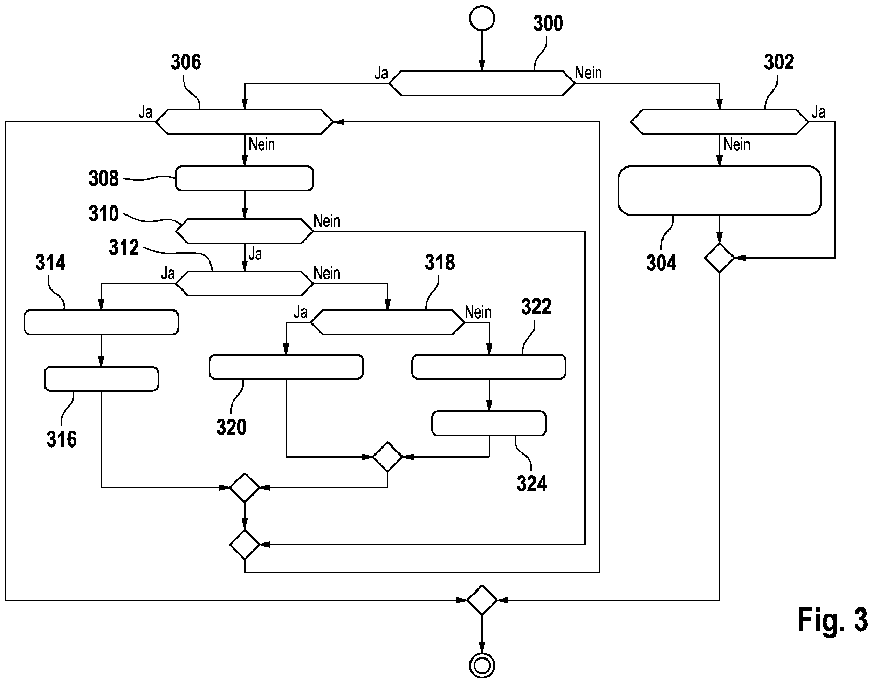

Die Figur 2 zeigt ein Flussdiagramm eines Ausführungsbeispiels des erfindungsgemäßen Verfahrens. Dabei werden in einem ersten Verfahrensschritt 200 Eingangssignale empfangen, wobei geprüft wird, ob die empfangenen Eingangssignale mehrfach mit dem selben Wert empfangen wurden. Dabei wird über entsprechende Zähler protokolliert wie oft ein bestimmter Wert eines Eingangssignals einer bestimmten Eingangssignalart empfangen wurde. Dieser Verarbeitungsschritt bezüglich des Empfangens und initialen Verarbeitens von Eingangssignalen wird im Folgenden mit Bezug auf Figur 3 beschrieben.

Nach dem Empfangen der Eingangssignale und der initialen Verarbeitung werden anschließend in Schritt 202 die Eingangssignale hinsichtlich ihrer Validität geprüft und es werden temporäre Ausgangsdatenelemente erzeugt. Wenn dabei alle Eingangssignale validiert werden können, werden die temporären Ausgangsdatenelemente als tatsächliche Ausgangsdatenelemente angenommen und als Steuerungsinformationen bereitgestellt.

Abschließend wird in Schritt 204 die Fehlernachbehandlung durchgeführt, bei der im Falle eines Abbruchs des Verfahrens anhand von Fehlerkennzeichen geprüft wird, was der Grund für den Verfahrensabbruch war.

Die Figur 3 zeigt ein Flussdiagramm zur initialen Verarbeitung von Eingangssignalen gemäß Schritt 200 des in Figur 2 dargestellten Verfahrens, bei der geprüft wird, ob Eingangssignale der unterschiedlichen Eingangssignalarten mehrfach mit dem selben Wert empfangen wurden. Hierzu wird in einem ersten Verfahrensschritt 300 geprüft, ob eine vorgegebene maximale Verfahrenslaufzeit bereits verstrichen ist. Wird dabei festgestellt, dass die Verfahrenslaufzeit bereits abgelaufen ist, wird nachfolgend in Schritt 302 geprüft, ob für alle Eingangssignalarten die jeweiligen Eingangssignale mit einer vorgegebenen Anzahl von Wiederholungen mit dem selben Informationsgehalt empfangen wurden. Wird dabei festgestellt, dass für alle Eingangssignalarten jeweils Eingangssignale mit der vorgeschriebenen Anzahl von Wiederholung empfangen wurden, geht das Verfahren zu Verfahrensschritt 202 über. Wird hingegen festgestellt, dass für wenigstens eine Eingangssignalart das entsprechende Eingangssignal nicht mit der vorgegebenen Anzahl von Wiederholungen empfangen wurde, wird in Schritt 304 ein Fehlerkennzeichen erzeugt, das anzeigt, dass die vorgeschriebene Verfahrenslaufzeit überschritten wurde, ohne dass für alle Eingangssignalarten Eingangssignale mit der erforderlichen Zahl von Wiederholungen empfangen wurden. Auch in diesem Fall fährt das Verfahren anschließend mit dem Verfahrensschritt 202 fort.

Wird in Schritt 300 hingegen festgestellt, dass die Verfahrenslaufzeit noch nicht abgelaufen ist, wird anschließend in Schritt 306 ebenfalls geprüft, ob alle Eingangssignale für die Eingangssignalarten bereits mit der vorgegebenen Zahl von Wiederholungen empfangen wurden. Ist dies der Fall, geht das Verfahren zu Schritt 202 über. Sind hingegen noch nicht für alle Eingangssignalarten Eingangssignale mit der vorgegebenen Zahl von Wiederholungen empfangen worden, werden anschließend in Schritt 308 die jeweiligen Eingangssignale überprüft. Hierzu wird in Schritt 310 zunächst geprüft ob ein Eingangssignal empfangen wurde. Ist dies nicht der Fall, springt das Verfahren zurück auf den Verfahrensschritt 306. Wird hingegen festgestellt, dass ein Eingangssignal empfangen wurde, wird anschließend in Schritt 312 geprüft ob das Eingangssignal dieser Eingangssignalart zum ersten Mal empfangen wurde. Handelt es sich um einen erstmaligen Empfang des Eingangssignals, wird in Schritt 314 ein entsprechender Zähler mit dem Wert 1 initialisiert, und der Wert des Eingangssignals wird in Schritt 316 für die Eingangssignalart gespeichert.

Wird hingegen in Schritt 312 festgestellt, dass das Eingangssignal zuvor bereits empfangen wurde, wird in Schritt 318 anschließend geprüft, ob das zuvor empfangene Eingangssignal dieser Art denselben Wert aufgewiesen hat. Ist dies der Fall, wird anschließend in Schritt 320 ein entsprechender Zähler für den Empfang des Eingangssignalwerts für diese Eingangssignalart um 1 erhöht und das Verfahren springt zurück zu Schritt 310. Handelt es sich hingegen um einen anderen Wert des Eingangssignals, wird in Schritt 322 der entsprechende Zähler für den Eingangssignalwert mit einem Wert von 1 neu gestartet, und der Wert des Eingangssignals in Schritt 324 entsprechend aktualisiert, sodass der neu empfangene Wert nunmehr als Wert des Eingangssignals angenommen wird. Anschließend springt das Verfahren zurück zu Schritt 310.

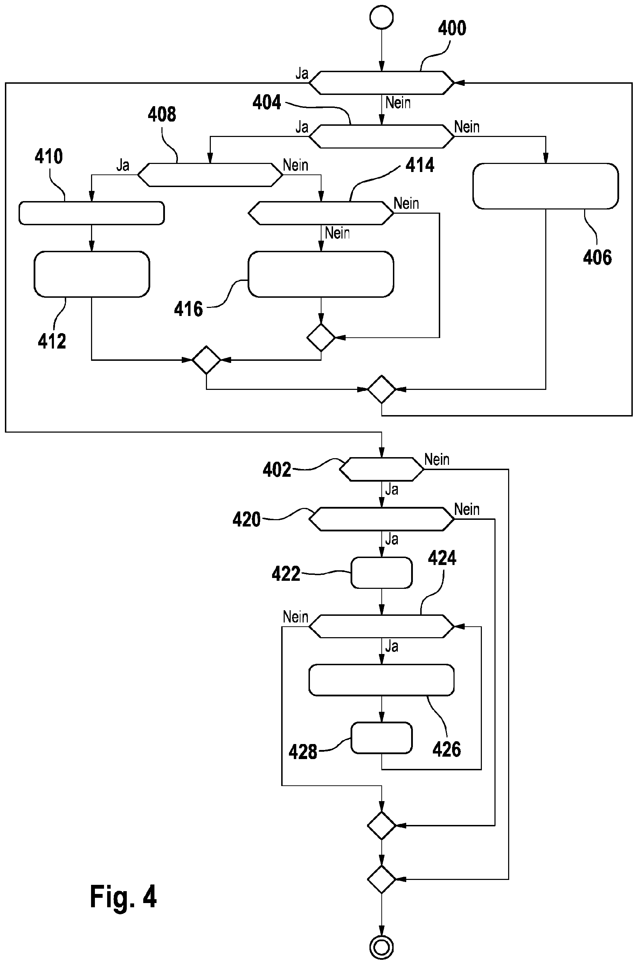

Im Folgenden wird nun mit Bezug auf Figur 4 die Validierung der Eingangssignale, sowie die Bestimmung der temporären Ausgangsdatenelemente gemäß Schritt 202 des in Figur 2 dargestellten Verfahrens beschrieben. Die im folgenden beschriebenen Verfahrensschritte schließen demnach direkt an die zuvor mit Bezug auf Figur 3 beschriebenen Verfahrensschritte an.

Dabei wird in einem ersten Verfahrensschritt 400 zunächst abgefragt, ob alle Eingangssignale geprüft wurden. Ist dies der Fall, fährt das Verfahren mit dem Verfahrensschritt 402 fort, auf den später eingegangen wird. Wird hingegen in Schritt 400 festgestellt, dass noch nicht alle Eingangssignale geprüft wurden, wird in einem nachfolgenden Verfahrensschritt 404 geprüft ob für eine bestimmte Eingangssignalart das empfangene Eingangssignal gültig ist. Hierzu kann beispielsweise geprüft werden, ob die während der initialen Verarbeitung der Eingangssignale verwendeten Zähler für bestimmte Werte des Eingangssignals eine vorbestimmte Zahl erreicht haben, also ein Eingangssignal mit einer bestimmten Anzahl von Wiederholungen direkt aufeinanderfolgend empfangen wurde. Wird hierbei festgestellt, dass das Eingangssignal nicht gültig ist, wird in Schritt 406 ein entsprechendes Fehlerkennzeichen erzeugt, welches anzeigt, dass ein empfangenes Eingangssignal ungültig war. Anschließend springt das Verfahren zurück zu Schritt 400.

Wird in Schritt 404 hingegen festgestellt, dass das betrachtete Eingangssignal gültig ist, wird in Schritt 408 geprüft, ob der Wert des Eingangssignals für die Eingangssignalart erstmals empfangen wurde, oder die durch das Eingangssignal codierte Systemkonfiguration zuvor bereits bekannt war. Wird dabei festgestellt, dass es sich um eine erstmals empfangene Systemkonfiguration handelt, wird in Schritt 410 auf Grundlage der empfangenen Systemkonfiguration bzw. des Inhalts des Eingangssignals ein temporäres Ausgangsdatenelement als Funktion des Wertes des Eingangssignals bestimmt, und in Schritt 412 ein entsprechender Marker gesetzt, der anzeigt, dass das empfangene Eingangssignal gültig ist. Anschließend springt das Verfahren zurück zu Schritt 400.

Wird hingegen in Schritt 408 festgestellt, dass die Systemkonfiguration zuvor bereits empfangen wurde, wird in Schritt 414 geprüft, ob der empfangene Wert des Eingangssignals derselbe ist, der zuvor bereits bekannt war. Ist dies der Fall, springt das Verfahren zurück auf den Verfahrensschritt 400. Wird hingegen festgestellt, dass es sich nicht um denselben Wert des Eingangssignals handelt, wird in dem nachfolgenden Verfahrensschritt 416 ein Fehlerkennzeichen erzeugt, das anzeigt, dass ein ungültiger neuer Wert des Eingangssignals für eine bekannte Systemkonfiguration empfangen wurde. Anschließend springt das Verfahren wiederum zurück auf Schritt 400.

Wird bei Schritt 400 festgestellt, dass bereits alle Eingangssignale geprüft wurden, wird anschließend in Schritt 402 abgefragt ob alle empfangenen Eingangssignale gültig waren. Ist dies nicht der Fall, springt das Verfahren zu dem im Folgenden noch beschriebenen Verfahrensschritt 204 des in Figur 2 dargestellten Verfahrens, in dem eine Fehleranalyse durchgeführt wird.

Wird hingegen in Schritt 402 festgestellt, dass alle Eingangssignale gültig sind, wird anschließend in Schritt 420 abgefragt, ob es sich um eine erstmalig empfangene Systemkonfiguration handelt. Ist dies nicht der Fall, springt das Verfahren auf den Verfahrensschritt 204. Wird hingegen festgestellt, dass es sich um eine erstmalig empfangene Systemkonfiguration handelt wird in Schritt 422 ein Zähler i mit dem Wert 0 initialisiert. anschließend wird in Schritt 424 geprüft, ob der Wert des Zählers i kleiner oder gleich der Anzahl von vorgesehenen Ausgangsdatenelementen ist. Ist dies der Fall, wird in Schritt 426 das durch den Zähler i angezeigte Ausgangsdatenelement auf den Wert des zuvor bestimmten entsprechenden temporären Ausgangsdatenelemente gesetzt und der Wert des Zählers i um 1 erhöht. Anschließend wird Schritt 424 des Verfahrens wiederholt, bis in Schritt 424 festgestellt wird, dass der Wert des Zählers i größer als die Anzahl der möglichen Ausgangsdatenelemente ist. Das Verfahren springt dann auf den Verfahrensschritt 204.

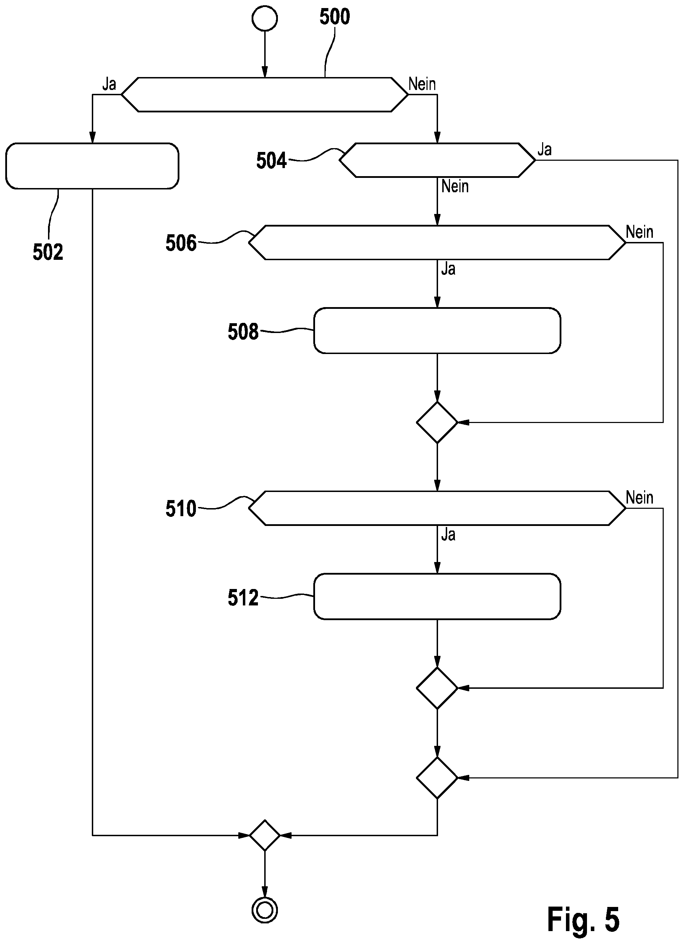

Die abschließende Fehlerbetrachtung gemäß Verfahrensschritt 204 wird im Folgenden mit Bezug auf Figur 5 näher beschrieben. Dabei wird in einem ersten Verfahrensschritt 500 geprüft, ob das Fehlerkennzeichen gesetzt ist, welches anzeigt, dass die vorgeschriebene Verfahrenslaufzeit überschritten wurde. Ist dies der Fall, wird in Schritt 502 die Fehlermeldung ausgegeben, dass nicht alle Eingangssignale innerhalb der vorgegebenen Zeitspanne empfangen wurden, woraufhin das Verfahren endet.

Wird hingegen in Schritt 500 festgestellt, dass die Verfahrenslaufzeit nicht abgelaufen war, wird in Schritt 504 geprüft ob für alle Eingangssignalarten Eingangssignale empfangen wurden und alle Eingangssignale gültig sind. Ist dies der Fall, wird das Verfahren an dieser Stelle beendet. Wird hingegen festgestellt, dass nicht für alle Eingangssignalarten Eingangssignale empfangen wurden und/oder nicht alle Eingangssignale gültig sind, wird in Schritt 506 geprüft, ob für zumindest eine Eingangssignalart das zugeordnete Fehlerkennzeichen anzeigt, dass ein ungültiger Wert des Eingangssignals empfangen wurde. Ist dies der Fall wird in Schritt 508 eine Fehlermeldung ausgegeben, die anzeigt, dass ein ungültiger Wert für ein Eingangssignal empfangen wurde.

Ist hingegen kein solches Fehlerkennzeichen gesetzt, wird anschließend in Schritt 510 geprüft, ob das Fehlerkennzeichen wenigstens eines Eingangssignals anzeigt, dass ein ungültiger neuer Wert des entsprechenden Eingangssignals empfangen wurde. Ist dies nicht der Fall, endet das Verfahren an dieser Stelle. Wird hingegen ein solches Fehlerkennzeichen ermittelt, wird in Schritt 512 eine Fehlermeldung ausgegeben, dass eine abweichende Systemkonfiguration empfangen wurde.

## Patentansprüche

1. Verfahren zur Bereitstellung von Steuerungsinformationen für eine Fahrassistenzfunktion eines Fahrzeugs durch eine Steuervorrichtung, wobei ein Signaleingang der Steuervorrichtung mit einer Signalquelle verbunden ist und wobei ein Signalausgang der Steuervorrichtung mit einer die Fahrassistenzfunktion umsetzenden Vorrichtung verbunden ist, wobei die Steuervorrichtung einen Datenspeicher aufweist, in dem eine Zuordnung hinterlegt ist, die von der Signalquelle empfangenen Eingangssignalarten jeweils Ausgangsdatenelemente zuordnet, wobei das Verfahren die folgenden Schritte aufweist:
• Empfangen von Eingangssignalen von der Signalquelle über den Signaleingang der Steuervorrichtung,
• Validieren der empfangenen Eingangssignale,
• Bestimmen von temporären Werten für die Ausgangsdatenelemente aus den entsprechend der Zuordnung den Ausgangsdatenelementen zugeordneten Eingangssignalen,
• Wenn für jede Eingangssignalart jeweils wenigstens ein Eingangssignal empfangen und alle Eingangssignale validiert wurden, Setzen der jeweils temporären Werte als Werte der entsprechenden Ausgangsdatenelemente, und
• Bereitstellen der Ausgangsdatenelemente als Steuerungsinformationen für die die Fahrassistenzfunktion umsetzende Vorrichtung.

2. Verfahren nach Anspruch 1, **dadurch gekennzeichnet, dass** in der Zuordnung jeder Eingangssignalart und jedem Ausgangsdatenelement jeweils ein eindeutiger Identifikator zugeordnet ist, wobei die Zuordnung von Eingangssignalarten zu Ausgangsdatenelementen durch eine Verknüpfung der Identifikatoren erfolgt.

3. Verfahren nach Anspruch 1 oder 2, **dadurch gekennzeichnet, dass** es sich bei der Signalquelle um einen Feldbus des Fahrzeugs handelt, wobei über den Feldbus übermittelte Eingangssignale Fahrzustandsgrößen des Fahrzeugs beschreiben.

4. Verfahren nach einem der vorherigen Ansprüche, **dadurch gekennzeichnet, dass** die Zuordnung Berechnungsvorschriften zur Bestimmung des Wertes eines bestimmten Ausgangsdatenelements aus wenigstens einem zugeordneten Eingangssignal aufweist.

5. Verfahren nach einem der vorherigen Ansprüche, **dadurch gekennzeichnet, dass** bei dem Validieren eines Eingangssignals das Eingangssignal als validiert gilt, wenn das Eingangssignal mehrfach, mit einer vorgegebenen Anzahl an Wiederholungen, mit identischem Informationsgehalt empfangen wurde.

6. Verfahren nach einem der vorherigen Ansprüche, **dadurch gekennzeichnet, dass** das Verfahren abgebrochen und eine Fehlermeldung ausgegeben wird, wenn innerhalb einer vordefinierten Zeitspanne wenigstens ein Eingangssignal nicht validiert wurde.

7. Verfahren nach einem der vorherigen Ansprüche, **dadurch gekennzeichnet, dass** bei Feststellung einer Invalidität eines Eingangssignals das Eingangssignal als ungültig gekennzeichnet wird, wobei das Kennzeichen einen Grund für die Invalidität identifiziert.

8. Computerprogrammprodukt mit durch eine Datenverarbeitungsvorrichtung interpretierbaren Instruktionen, das, auf der Datenverarbeitungsvorrichtung ausgeführt, die Datenverarbeitungsvorrichtung dazu veranlasst, das Verfahren nach einem der vorherigen Ansprüche auszuführen.

## Claims

1. Method for providing control information for a driver assistance function of a vehicle by means of a control device, wherein a signal input of the control device is connected to a signal source and wherein a signal output of the control device is connected to a device which implements the driver assistance function, wherein the control device has a data memory in which an assignment is stored which respectively assigns output data elements to input signal types which are received from the signal source, wherein the method comprises the following steps:
• receiving input signals from the signal source via the signal input of the control device,
• validating the received input signals,
• determining temporary values for the output data elements from the input signals which are assigned to the output data elements in accordance with the assignment,
• if at least one input signal has been respectively received for each input signal type and all the input signals have been validated, setting the respective temporary values as values of the corresponding output data elements, and
• providing the output data elements as control information for the device which implements the driver assistance function.

2. Method according to Claim 1, **characterized in that** a uniquely defined identifier is respectively assigned in the assignment of each input signal type and each output data element, wherein the assignment of input signal types to output data elements is carried out by linking the identifiers.

3. Method according to Claim 1 or 2, **characterized in that** the signal source is a field bus of the vehicle, wherein input signals which are transferred via the field bus describe vehicle status variables of the vehicle.

4. Method according to one of the preceding claims, **characterized in that** the assignment has calculation rules for determining the value of a specific output data element from at least one assigned input signal.

5. Method according to one of the preceding claims, **characterized in that** during the validation of an input signal the input signal is considered to be validated if the input signal has been received repeatedly, with a specified number of repetitions, with identical information content.

6. Method according to one of the preceding claims, **characterized in that** the method is aborted and a fault message is output if at least one input signal was not validated within a predefined time period.

7. Method according to one of the preceding claims, **characterized in that** when invalidity of an input signal is detected, the input signal is characterized as invalid, wherein the characterization identifies a reason for the invalidity.

8. Computer program product having instructions which can be interpreted by a data processing device, which computer program product is run on the data processing device and causes the data processing device to execute the method according to one of the preceding claims.

## Revendications

1. Procédé destiné à fournir des informations de commande d'une fonction d'assistance à la conduite d'un véhicule par le biais d'un dispositif de commande, une entrée de signal du dispositif de commande étant reliée à une source de signal et une sortie de signal du dispositif de commande étant reliée à un dispositif mettant en œuvre la fonction d'assistance à la conduite, le dispositif de commande comportant une mémoire de données dans laquelle est mémorisée une association qui associe des types de signal d'entrée reçus de la source de signal respectivement à des éléments de données de sortie, le procédé comprenant les étapes suivantes :
• recevoir des signaux d'entrée de la source de signal par le biais de l'entrée de signal du dispositif de commande,
• valider les signaux d'entrée reçus,
• déterminer des valeurs temporaires pour les éléments de données de sortie à partir des signaux d'entrée associés aux éléments de données de sortie conformément à l'association,
• si au moins un signal d'entrée a été reçu pour chaque type de signal d'entrée et si tous les signaux d'entrée ont été validés, définir les valeurs temporaires respectives comme valeurs des éléments de données de sortie correspondants, et
• fournir les éléments de données de sortie comme informations de commande pour le dispositif mettant en œuvre la fonction d'assistance à la conduite.

2. Procédé selon la revendication 1, **caractérisé en ce qu'**un identificateur unique est associé dans l'association à chaque type de signal d'entrée et à chaque élément de données de sortie, l'association de types de signal d'entrée à des éléments de données de sortie étant effectuée par une combinaison d'identificateurs.

3. Procédé selon la revendication 1 ou 2, **caractérisé en ce que** la source de signal est un bus de terrain du véhicule, des signaux d'entrée transmis par le biais du bus de terrain décrivant des grandeurs d'état de conduite du véhicule.

4. Procédé selon l'une des revendications précédentes, **caractérisé en ce que** l'association comporte des règles de calcul pour déterminer la valeur d'un élément de données de sortie déterminé à partir d'au moins un signal d'entrée associé.

5. Procédé selon l'une des revendications précédentes, **caractérisé en ce que**, lors de la validation d'un signal d'entrée, le signal d'entrée est considéré comme validé si le signal d'entrée a été reçu avec un contenu d'informations identique plusieurs fois, avec un nombre prédéterminé de répétitions.

6. Procédé selon l'une des revendications précédentes, **caractérisé en ce que** le procédé est interrompu et un message d'erreur est délivré si au moins un signal d'entrée n'a pas été validé dans un laps de temps prédéfini.

7. Procédé selon l'une des revendications précédentes, **caractérisé en ce que**, lors de la détermination d'une invalidité d'un signal d'entrée, le signal d'entrée est caractérisé comme invalide, la caractéristique identifiant une raison de l'invalidité.

8. Progiciel comprenant des instructions qui peuvent être interprétées par un dispositif de traitement de données et qui, lorsqu'elles sont exécutées par le dispositif de traitement de données, ordonne au dispositif de traitement de données de mettre en œuvre le procédé selon l'une des revendications précédentes.
